# EUROPEAN PATENT SPECIFICATION

(11) **EP 1 396 966 B1**
(45) Date of publication and mention of the grant of the patent: **26.04.2006**
(21) Application number: 02020010.1
(22) Date of filing: 05.09.2002
(51) Int. Cl.: H04L 12/56, H04Q 7/28

(54) **Dynamic bandwidth allocation for variable bit rate streaming data**
Dynamische Bandbreitenzuweisung bei Datenströmen mit variabler Bitrate
Attribution dynamique de bande passante d'un flux de données à débit binaire variable

(43) Date of publication of application: 10.03.2004
(73) Proprietor: Sony Deutschland GmbH, 50829 Köln (DE)
(72) Inventor: Spalink, Gerd, Sony Deutschland GmbH, 70327 Stuttgart (DE); Höfflinger, Jens, Sony Deutschland GmbH, 70327 Stuttgart (DE); Stadelmeier, Lothar, Sony Deutschland GmbH, 70327 Stuttgart (DE); Dawidowsky, Frank, Sony Deutschland GmbH, 70327 Stuttgart (DE)
(74) Representative: Müller - Hoffmann & Partner

(56) References cited:
- EP-A- 0 713 347
- GB-A- 2 320 162
- US-A- 6 081 536
- US-A1- 2001 021 197

## Description

The invention relates to a method to allocate bandwidth, which is intended for a central controller of a network, to a method to reserve bandwidth for a connection of a network, which is intended for a requesting terminal or a central controller of said network, to a central controller of a network, and to a requesting terminal of a network.

In many types of networks there exists the problem of bandwidth limitation. If there is no management for the allocation of bandwidth to the connections of the network, some connections may not receive a needed amount of bandwidth. This is a problem for connections requiring a certain Quality of Service (QoS), as typically e.g. for video connections. The common solution to this problem is to reserve a fixed amount of bandwidth for each QoS connection. In the ETSI (European Telecommunications Standard Institute) HIPERLAN/2 (High Performance Radio Local Area Networks) standard (in the following referred to as HIPERLAN/2 standard) this may be done through the method of fixed capacity allocation (FCA).

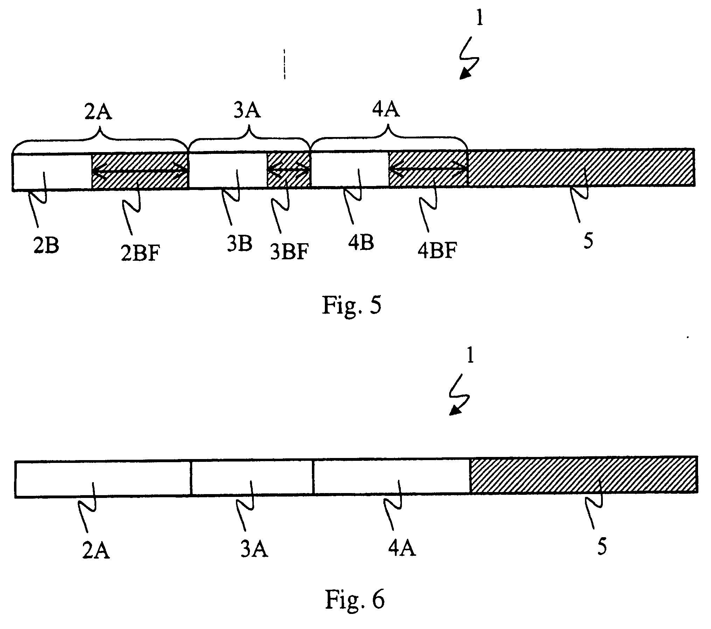

Fig. 6 shows a diagram to illustrate the bandwidth allocation of an example network according to prior art. The example network has three QoS connections. Each connection has a fixed reserved amount of bandwidth. In Fig. 6 the first connection has a first fixed reserved amount of bandwidth 2A, the second connection has a second fixed reserved amount of bandwidth 3A, and the third connection has a third fixed reserved amount of bandwidth 4A. Further, there is a remaining amount of bandwidth 5 of the total available bandwidth 1 that can be used by other connections. When a QoS connection has a variable bit rate, the corresponding owner of the connection reserves the maximum required bandwidth. The owner of a connection is a device and/or application to which the connection belongs to. According to the HIPERLAN/2 standard a device may be a wireless terminal or the central controller of the network.

In the case illustrated in Fig. 6 a QoS connection can use its fixed reserved amount of bandwidth independent of the actual traffic, i.e. independent of its actual needed bandwidth. The difference between maximum and minimum required amount of bandwidth remains blocked even if only the minimum bandwidth is needed at a certain moment. Therefore, bandwidth may be temporarily wasted and devices/applications requesting resources may fall due to an alleged lack of bandwidth even though the needed bandwidth may be actually available.

Known prior art without a fixed reserved amount of bandwidth is e. g. known from US-A-6,081,536. In this prior art, subchannel assignment algorithms are described, wherein a subscriber unit may be assigned a number of subchannels. If a subscriber unit has no data to present for transmission, the previously assigned number of subchannels may be de-allocated. In case a subscriber unit again needs more subchannels, the needed subchannels are assigned to this subscriber unit. However, the allocation of previously de-allocated subchannels may not be fast enough to ensure a certain quality of service for said subscriber unit.

Further prior art is known from GB 2 320 162 A, which discloses a satellite communication system, wherein the bandwidth available for an individual call between a mobile communication terminal and a base station is varied according to the demand for bandwidth during that call. The bandwidth may be increased when a large quantity of data is to be sent, but is reduced at other times and the additional capacity made available to other users. However, the method of this prior art does not ensure a certain quality of service for several connections.

Further, document EP 0 713 347 A2 discloses a method and apparatus enabling Synchronous Transfer Mode (STM) and packet mode access, in particular with Asynchronous Transfer Mode (ATM) applications on a broadband communications network. Thereby, a bandwidth controller reserves bandwidth of an ATM network. The ATM traffic is assigned a minimum guaranteed bandwidth to meet a certain Quality of Service (QoS), and additional "extra" bandwidth can be assigned, if spare bandwidth is available on the channel, to as many as ATM calls as possible, to provide better than the specified QoS. According to this prior art, extra bandwidth is thus provided in addition to a predetermined amount of bandwidth. This, however, may lead to problems, because further QoS connections may be affected from the provided extra bandwidth.

The object underlying the invention is to provide an improved method and means to allocate bandwidth enabling the use of bandwidth that cannot be used in prior art networks supporting QoS connections, wherein the quality of service of QoS connections is not affected.

To achieve this object, the invention provides a method to allocate bandwidth according to claim 1. In addition, the invention provides a centred controller as defined in claim 7 and a requesting terminal as defined in claim 8. Further features and preferred embodiments are respectively defined in respective subclaims.

According to the invention, the method to allocate bandwidth, which is intended for a central controller of a network, comprises the following steps, allocating a predetermined amount of bandwidth to a certain connection requiring a certain quality of service, wherein an owner of said certain connection is a requesting terminal which is a terminal of said network or said central controller, freeing a certain amount of the allocated predetermined amount of bandwidth, said certain amount being the difference of said predetermined amount of bandwidth and a needed amount of bandwidth indicated by said owner, wherein said needed amount of bandwidth does not exceed said predetermined amount of bandwidth, and in case said owner requests a re-allocation of all or parts of the freed bandwidth, re-allocating as much of the freed bandwidth, so that said indicated amount of bandwidth is available to said owner, wherein said allocated predetermined amount of bandwidth is allocated based on fixed capacity allocation, FCA.

The method to allocate bandwidth assures that less bandwidth may be wasted, if a connection that reserved a certain amount of bandwidth to guarentee a certain quality of service (QoS). i.e. a QoS connection, does not need all of the reserved certain amount of bandwidth. A key feature thereby is that the QoS connection may immediately (i.e. as soon as possible) receive all or parts of the certain amount of bandwidth as soon as requested, so that the certain quality of service is always secured.

Preferably, within the method to allocate bandwidth, some or all of said certain amount of bandwidth is allocated to a connection without quality of service requirements, the connection being a connection of the network. QoS connections are only granted taking into account the original allocations, but no dynamic reduced reservations.

Further, said network is preferably an ad hoc network, in particular operated according to the ETSI HIPERLAN/2 standard.

According to the invention, the central controller of a network comprises a bandwidth allocation means that allocates a predetermined amount of bandwidth to a connection with a certain quality of service requirement, the owner of said connection being said central controller or a requesting terminal, a bandwidth freeing means that receives a request signal sent out by said owner indicating a needed amount of bandwidth and that frees - in particular in the case that said certain amount of bandwidth neither exceeds said predetermined amount nor said needed amount of bandwidth - a certain amount of bandwidth which is the difference of said predetermined amount of bandwidth and said needed amount of bandwidth, and a bandwidth re-allocation means that - in particular in the case that said certain amount of bandwidth neither exceeds said predetermined amount nor said needed amount of bandwidth - immediately re-allocates as much of said certain amount of bandwidth, so that said indicated amount of bandwidth according to said request signal is available to said owner.

Preferably, the central controller comprises a transmit queue for buffering sending data, and a monitoring means, that monitors the filling status of said transmit queue and indicates said needed amount of bandwidth, which depends on the filling status, to said bandwidth freeing means and/or bandwidth re-allocations means. In addition said network is preferably an ad hoc network, in particular operated according to the ETSI HIPERLAN/2 standard.

According to the invention, a requesting terminal of a network having a connection with other terminals of the network or with a central controller of the network, the connection requiring a certain quality of service and therefore a predetermined amount of bandwidth, comprises a transmit queue for buffering sending data, a monitoring means, that monitors the filling status of said transmit queue and sends out a request signal to said central controller indicating a needed amount of bandwidth, which depends on the filling status. Said network is preferably an ad hoc network, in particular operated according to the ETSI HIPERLAN/2 standard.

The invention and advantageous details thereof will be explained by way of an exemplary embodiment thereof in the following with reference to the accompanying drawings, in which
- **Fig. 1**: shows the scenario for bandwidth allocation for the case of an uplink;
- **Fig. 2A**: shows a flowchart illustrating the method for bandwidth allocation in the case of an uplink, which method is executed by the central controller of a HIPERLAN/2 network;
- **Fig. 2B**: shows a flowchart illustrating the method for bandwidth allocation in the case of an uplink, which method is executed by a mobile terminal of a HIPERLAN/2 network;
- **Fig. 3**: shows the scenario for bandwidth allocation for the case of a downlink:
- **Fig. 4**: shows a flowchart illustrating the method for bandwidth allocation in the case of a downlink, which method is executed by the central controller of a HIPERLAN/2 network;
- **Fig. 5**: shows an example of bandwidth allocation of a network with QoS connections, wherein the bandwidth is allocated according to the invention; and
- **Fig. 6**: shows an example of bandwidth allocation of a network with QoS connections, wherein the bandwidth is allocated according to prior art.

As mentioned above, Fig. 6 shows the allocation of the total available bandwidth 1 of an exemplary network with three QoS connections. In the example shown in Fig. 5 the same total available bandwidth 1 of the same exemplary network is allocated to the same three connections. However, in Fig. 5 the bandwidth is allocated according to the invention. Each QoS connection has a fixed reserved amount of bandwidth as according to the prior art, i.e. the first connection has the first fixed reserved amount of bandwidth 2A, the second connection has the second fixed reserved amount of bandwidth 3A, and the third connection has the third fixed reserved amount of bandwidth 4A. Further, there is a remaining amount of bandwidth 5 of the total available bandwidth 1 that can be used by other connections. In Fig. 5, the three connections are currently not using all of the fixed reserved amounts of bandwidth. The first connection is currently only using a first used amount of bandwidth 2B, the second connection is currently only using a second used amount of bandwidth 3B, and the third connection is currently only using a third used amount of bandwidth 4B. Therefore, according to the invention, amounts up to the unused amounts of bandwidth are temporarily freed, i.e. a first temporarily freed amount of bandwidth 2BF, a second temporarily freed amount of bandwidth 3BF, and a third temporarily freed amount of bandwidth 4BF are temporarily freed. These temporarily freed amounts of bandwidth can now be used by other connections. Further, these freed amounts of bandwidth can vary in size depending on the actual used amount of bandwidth of a connection, as indicated by two way arrows in Fig. 5. That means, the first temporarily freed amount of bandwidth 2BF may vary depending on the used amount of bandwidth 2B of the first connection, the second temporarily freed amount of bandwidth 3BF may vary depending on the used amount bandwidth 3B of the second connection, and the third temporarily freed amount of bandwidth 4BF may vary depending on the used amount of bandwidth 4B of the third connection. It is a key feature of the invention that the temporarily freed amounts of bandwidth can be re-allocated immediately to the respective connection, if the connection requires all or parts of the temporarily freed amount of bandwidth. This means, the quality of service of a QoS connection is not affected, while at the same time, more bandwidth for other connections becomes available. It should be noted that preferably the temporarily freed amounts of bandwidth are allocated to non QoS connections.

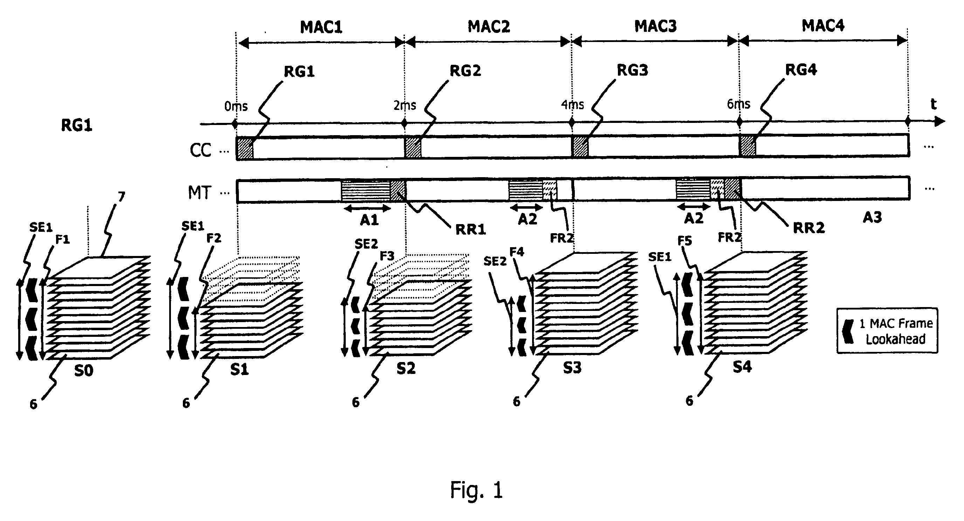

Fig. 1 shows the scenario of an uplink, i.e. data is transmitted from a mobile terminal MT to a central controller CC within a network, which is operated according to the HIPERLAN/2 standard. In an initial state SO an uplink queue 6 of the mobile terminal MT has a first filling status F1. In the initial state SO the uplink queue 6 is filled with twelve data packages 7. One data package 7 corresponds to the amount of data that can be transmitted in four long channels (LCH). In the example, for the connection of the mobile terminal MT there are 4x4 (=16) fixed reserved long channels (LCH) reserved for the mobile terminal MT. The number of reserved long channels is proportional to the needed amount of bandwidth. In the example of Fig. 1 the mobile terminal MT has a fixed reserved amount of bandwidth equivalent to the number of fixed reserved long channels and the fixed reserved amount of bandwidth is allocated through the method of fixed capacity allocation (FCA). The mobile terminal MT determines the needed number of channels, which corresponds to a certain needed amount of bandwidth, depending on the filling status of the uplink queue 6 and a current sendable amount of data. The current sendable amount of data is equal to the number of data packages 7 that can be transmitted in the subsequent three MAC frames, given the current number of reserved long channels, i.e. a lookahead of three MAC frames is used. Generally, the lookahead can be any positive integer value. The current number of reserved long channels is the number of long channels currently allocated to the mobile terminal MT by the central controller CC and may change from a minimum value of one up to the number of fixed reserved long channels. The current number of reserved long channels determines the amount of data that can be transmitted within one MAC frame.

If the amount of data in the uplink queue 6 corresponding to a certain filling status is less than the current sendable amount of data, the mobile terminal MT sends a Resource Request (RR) to the central controller CC of the network, indicating the actual needed amount of bandwidth which in term corresponds to an actual needed number of channels. In this case the current number of reserved channels of the connection is reduced to the actual needed number of channels. This is done by the central controller CC and indicated to the mobile terminal MT by a Resource Grant (RG) sent in the subsequent MAC frame. If the amount of data in the uplink queue 6 corresponding to a certain filling status is more than the current sendable amount of data, the mobile terminal MT also sends a Resource Request (RR) to the central controller CC of the network, indicating the actual needed amount of bandwidth which in term corresponds to an actual needed number of channels. In this case the current number of reserved channels of the connection is augmented to the actual needed number of channels up to the fixed number of reserved long channels. This is done by the central controller CC and indicated to the mobile terminal MT by a Resource Grant (RG) sent in the subsequent MAC frame. Resource grants are sent by the central controller in the frame control channel FCH. Resource requests are sent in short channels SCH which are allocated in parallel to an FCA setup. Normally, resource requests or RRs are not used, if the connection is setup through the method of FCA.

By the number of fixed reserved long channels, the maximum sendable amount of data is determined. Here, because of the lookahead of three MAC frames, the maximum sendable amount of data is three times the amount of data that can be sent in the sixteen reserved long channels.

In the initial state S0 of Fig. 1 the amount of data in the uplink queue 6 corresponding to the first filling status F1 is equal to the first current sendable amount of data SE1. In a following first MAC frame MAC1, the central controller CC therefore sends a first resource grant RG1 to the mobile terminal MT indicating that the first current number of reserved long channels A1 is sixteen, which is equal to the number of fixed reserved long channels. In other words, the current needed amount of bandwidth is equal to the fixed reserved amount of bandwidth.

At the beginning of the first MAC frame MAC1, in a first state S1, a second filling status F2 of the uplink queue 6 indicates an amount of data below the first current send able amount of data SE1, e.g. because some data has been sent in a not shown MAC frame preceding the first MAC frame MAC1. In other words, less data arrived than were sent out in the time of an unshown previous MAC frame. Therefore, the mobile terminal MT sends a first resource request RR1 in a SCH within the first MAC frame MAC1 to the central controller CC indicating the actual needed amount of bandwidth which corresponds to an actual needed number of channels. This actual needed number of channels may range between one and the number of fixed reserved long channels. This actually is the number of data packages (2 LCHs), and not an entire arbitrary number of channels. The first resource request RR1 remains valid until a new resource request is sent.

In a following second MAC frame MAC2, in response to the first resource request RR1, the central controller CC sends a second resource grant RG2 to the mobile terminal MT indicating a second current number of reserved long channels A2. In the example, the second current number of reserved long channels A2 is twelve, i.e. the value is now lower than for the last current number of reserved long channels A1. Therefore, in subsequent MAC frames, three data packages 7 can be transmitted within one MAC frame. Since there are now less channels reserved for the connection, there are freed mobile terminal channels FR2 available for the use by other connections within the second MAC frame MAC2. At the beginning of the second MAC frame MAC2, in a second state S2, a third filling status F3 indicates an amount of data slightly below the second current sendable amount of data SE2. However, the amount of data corresponding to the third filling status F3 can be transmitted exactly within the next three MAC frames. Therefore, within the second MAC frame MAC2, no resource request is sent to the central controller CC and the current number of reserved channels remains unchanged for a subsequent third MAC frame MAC3. This means, in the third MAC frame MAC3, there are also freed mobile terminal channels FR2 available for the use by other connections. A third resource grant RG3 indicates the same current number of reserved channels as the second resource grant RG2 since the bandwidth need has not changed.

At the beginning of the third MAC frame MAC3, in a third state S3, a fourth filling status F4 indicates an amount of data that is larger than the second current sendable amount of data SE2, i.e. the amount of data in the buffer cannot be sent in the next three MAC frames, given the second current number of reserved long channels A2. Therefore, within the third MAC frame MAC3, a second resource request RR2 is sent from the mobile terminal MT to the central controller CC in a SCH indicating the actual needed amount of bandwidth which corresponds to an actual needed number of channels. Again, this second resource request RR2 remains valid until a new resource request may be sent. In a following fourth MAC frame MAC4, in response to the second resource request RR2. the central controller CC sends a fourth resource grant RG4 to the mobile terminal MT indicating a third current number of reserved long channels A3. In the example, the third current number of reserved long channels A3 is sixteen, which is equal to the first current number of reserved long channels A1. Therefore, in subsequent MAC frames, four data packages 7 can be transmitted within one MAC frame, i.e. the allocated bandwidth is augmented for the connection.

At the beginning of the fourth MAC frame MAC4, in a fourth state S4, a fifth filling status F5 indicates an amount of data that is equal to the first current sendable amount of data SE1. Therefore, within the fourth MAC frame MAC4, no resource request is sent from the mobile terminal MT to the central controller CC.

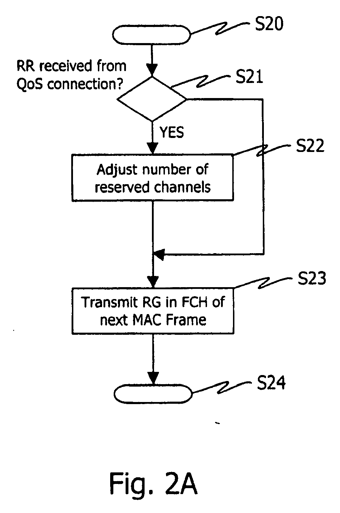

Fig. 2A shows a flowchart illustrating the method for bandwidth allocation in the case of an uplink, which method is executed by the central controller of a HIPERLAN/2 network. The illustrated method is executed for each connection once per MAC frame. In a central controller uplink initial state S20, the central controller waits until it receives a resource request RR from an FCA connection. If, in a first control step S21, the central controller receives a resource request RR, a subsequent step S22 is performed. In this step, the central controller determines and adjusts the current number of reserved long channels for the connection that sent the resource request RR. Then, in a first transmitting step S23, the central controller CC sends out a resource grant for the connection in the next MAC frame indicating the determined current number of reserved long channels.

If, in the first control step S21, no resource request RR is received, the control goes directly to the first transmitting step S23, i.e. if no resource request is received for a certain connection, the current number of reserved long channels is not changed and the resource grant RG sent out in the first transmitting step S23 indicates the value that was sent in the last MAC frame. Then the first final central controller state S24 is reached.

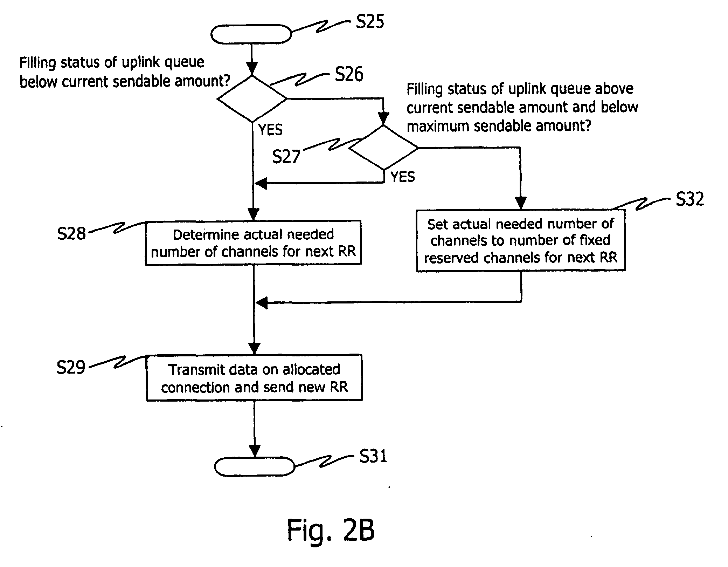

Fig. 2B shows a flowchart illustrating the method for bandwidth allocation in the case of an uplink, which method is executed by a mobile terminal of a HIPERLAN/2 network. In the mobile terminal initial state S25, the mobile terminal waits until the beginning of a MAC frame. At the beginning of a MAC frame, in a second control step S26, the mobile terminal checks the filling status of its uplink queue 6. If the filling status indicates an amount of data that is below the current sendable amount of data, a calculation step S28 is performed. In this calculation step S28, the actual needed number of channels is determined, which will be sent together with the next resource request RR. Since the filling status indicates an amount of data that is below the current sendable amount of data, the actual needed number of channels will be less than in the current MAC frame. In the following second transmitting step S29, the data is sent out within the next MAC frame in the current number of reserved long channels and a new resource request RR is sent in the SCH of the MAC frame. This new resource request RR indicates the determined actual needed number of channels. From the second transmitting step S29, a mobile terminal final state S31 is reached.

If the filling status in the second control step S26 indicates an amount of data that is above the current sendable amount of data, a third control step S27 is performed. If, in this step, the filling status of the uplink queue 6 indicates an amount of data that is above the current sendable amount and below the maximum sendable amount of data, the calculation step S28 is reached. Since the filling status indicates an amount of data that is above the current sendable amount of data, the actual needed number of channels will be more than in the current MAC frame. It may not exceed the number of fixed reserved long channels. In the following second transmitting step S29, the data is sent out within the next MAC frame in the current number of reserved long channels and a new resource request RR is sent in the SCH of the MAC frame. This new resource request RR indicates the determined actual needed number of channels. From the second transmitting step S29, again the mobile terminal final state S31 is reached.

If, in the third control step S27, the filling status of the uplink queue 6 indicates an amount of data that is above the maximum sendable amount of data, a setting step S32 is performed. In this setting step S32, the actual needed number of channels is set to the number of fixed reserved channels. This set value is transmitted together with the next new resource request RR. Then, the second transmitting step S29 is reached, i.e. the data is transmitted in the current number of reserved long channels within the current MAC frame and the new resource request RR is sent in the SCH of the MAC frame. The resource request RR indicates the number of fixed reserved channels. Subsequently, the mobile terminal final state S31 is reached.

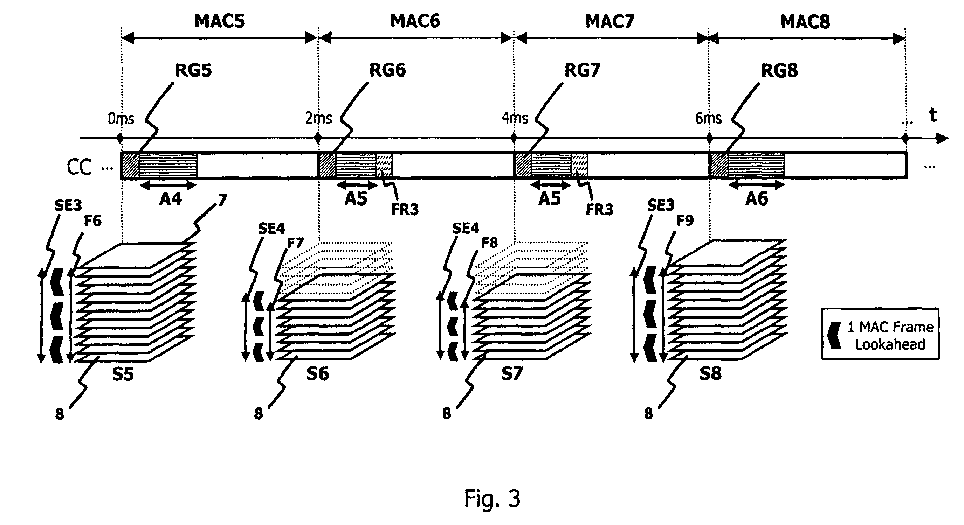

Fig. 3 shows the scenario for a downlink, i.e. data is transmitted from the central controller CC to a mobile terminal MT by a connection within a network run according to the HIPERLAN/2 standard. In a fifth state S5, a downlink queue 8 of the central controller CC has a sixth filling status F6. In the fifth state S5 the downlink queue 8 is filled with twelve data packages 7. In the example, for the connection of the central controller there are 4x4 (=16) fixed reserved long channels (LCH) reserved for the central controller CC. The number of reserved long channels is proportional to the needed amount of bandwidth. In the example of Fig. 3 the central controller CC has a fixed reserved amount of bandwidth equivalent to the number of fixed reserved long channels. In the example, the fixed reserved amount of bandwidth is allocated through the method of fixed capacity allocation (FCA). The central controller CC determines the needed number of channels, which corresponds to a certain needed amount of bandwidth, depending on the filling status of the dowlink queue 8 and the current sendable amount of data. As before, the current sendable amount of data is equal to the number of data packages 7 that can be transmitted in the subsequent three MAC frames, given the current number of reserved long channels, i.e. again a lookahead of three MAC frames is used. Generally, the lookahead can be any positive integer value. The current number of reserved long channels is the number of long channels currently allocated to the connection of the central controller CC and may change from a minimum value of one up to the number of fixed reserved long channels for the connection.

If the amount of data in the downlink queue 8 corresponding to a certain filling status is below the last sendable amount of data, the central controller CC determines the actual needed number of channels for the connection. Since the central controller CC allocates the current number of reserved long channels itself, it sets the current number of reserved long channels to the actual needed number of channels and indicates this number to the mobile terminals with a resource grant RG sent in the current MAC frame. In this case, the current number of reserved long channels will be less than the number of reserved long channels within the last MAC frame.

If the amount of data in the downlink queue 8 corresponding to a certain filling status is above the last sendable amount of data, the central controller CC determines the actual needed number of channels for the connection. Since the central controller CC allocates the current number of reserved long channels itself, it sets the current number of reserved long channels to the actual needed number of channels and indicates this number to the mobile terminals with a resource grant RG sent in the current MAC frame. In this case, the current number of reserved long channels will be greater than the number of reserved long channels within the last MAC frame. It may not exceed the number of fixed reserved long channels.

In the fifth state S5 of Fig. 3 the amount of data in the downlink queue 8 corresponding to a sixth filling status F6 is equal to a third current sendable amount of data SE3. In an initial fifth MAC frame MAC5, the central controller CC therefore sends a fifth resource grant RG5 to the mobile terminal MT indicating that a fourth current number of reserved long channels A4 is sixteen, which is equal to the number of fixed reserved long channels. At the beginning of a following sixth MAC frame MAC6, in a sixth state S6, a seventh filling status F7 indicates an amount of data below the fourth current sendable amount of data SE4. Therefore, the central controller CC sets the current number of reserved long channels from the fourth current number of reserved long channels A4 to a fifth current number of reserved long channels A5, which is lower. The central controller CC indicates this fifth current number of reserved long channels A5 to the mobile terminal with a sixth resource grant RG6 sent in the sixth MAC frame MAC6. Since channels have been freed by this procedure, there are freed central controller channels FR3 that can temporarily be used by other connections.

At the beginning of a following seventh MAC frame MAC7, in a seventh state S7, the amount of data in the downlink queue 8 corresponding to an eighth filling status F8 is lower than a fourth current sendable amount of data SE4. The amount of data in the downlink queue 8 can be sent within the next three subsequent MAC frames and is therefore in the range of the lookahead. Therefore, the current number of reserved long channels needs not to be changed. Thus, the central controller CC sends a seventh resource grant RG7 to the mobile terminal indicating the same current number of reserved long channels as indicated by the sixth resource grant RG6. Since the current number of reserved channels has not been changed, there remain the freed central controller channels FR3 for the use by other connections.

At the beginning of a next eighth MAC frame MAC8, in an eighth state S8, a ninth filling status F9 indicates an amount of data which is above the fourth sendable amount of data SE4. Therefore, the central controller CC augments the current number of reserved channels, such that the third current sendable amount SE3 is regained for the connection. This means, that a sixth current number of reserved long channels A6 is now reserved for the connection. This number is indicated to the mobile terminal via an eighth resource grant RG8 in the eighth MAC frame MAC8.

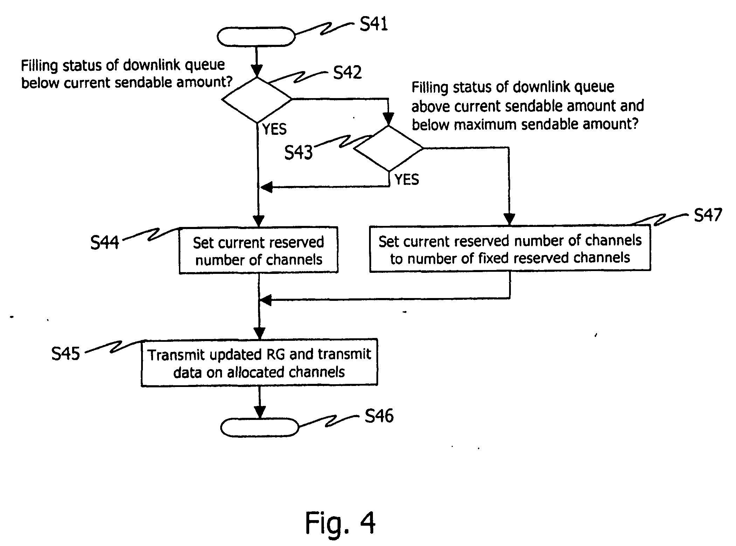

Fig. 4 shows a flowchart illustrating the method for bandwidth allocation in the case of a downlink, which method is executed by the central controller of a HIPERLAN/2 network. The illustrated method is executed for each connection of the central controller with mobile terminals once per MAC frame.

Starting from a downlink initial state S41 a fourth control step S42 is reached.

If, in the fourth control step S42, the filling status of the downlink queue 8 indicates an amount of data that is below the current sendable amount, a second setting step S44 is reached. In this second setting step S44, the central controller determines the actual needed number of channels and sets the current number of reserved long channels to this number. In this case, the current number of reserved long channels will be less than for the last MAC frame. In the following, a fourth transmitting step S45 is reached, where a resource grant RG indicating the current number of reserved long channels is sent to the mobile terminal MT having the connection with the central controller CC. Then a second final central controller state S46 is reached.

If, in the fourth control step S42, the filling status of the downlink queue 8 indicates an amount of data that is above the current sendable amount, a fifth control step S43 is reached.

If, in the fifth control step S43, the filling status indicates an amount of data above the maximum sendable amount of data, a third setting step S47 is reached. In this step, the central controller sets the current reserved number of channels to the number of fixed reserved channels. In other words, the fixed reserved amount of bandwidth allocated through the method of FCA is allocated to the connection. In the following, the fourth transmitting step S45 is reached, where a resource grant RG is sent to the mobile terminal indicating the current number of reserved long channels which is in this case equal to the number of fixed reserved channels. Further, in the fourth transmitting step S45, data is transmitted in the current number of reserved long channels. Then, the second final central controller state S46 is reached.

If, in the fifth control step S43, the filling status indicates an amount of data below the maximum sendable amount of data, the second setting step S44 is reached, where the current reserved number of channels is set to the actual needed number of channels. Then, the fourth transmitting step S45 is performed, where a resource grant RG is sent to the mobile terminal indicating the current number of reserved long channels for the connection. Further, in the fourth transmitting step S45, the data is transmitted in the current number of reserved channels. Then, the second final central controller state S46 is reached.

The invention can be summarized as follows:

For a connection of a network requiring a certain quality of service (QoS). i.e. a QoS connection, generally a fixed amount of bandwidth is allocated. In prior art networks this fixed amount of bandwidth cannot be used by other connections. Therefore, in case the QoS connection does not require all of the allocated fixed amount of bandwidth, bandwidth may be wasted. The present invention provides a method that enables the use of bandwidth, that is currently not used by a QoS connection. This currently unused bandwidth is temporarily freed, such that other connections may use this freed bandwidth. In case all or parts of the freed bandwidth is needed again by the connection, the bandwidth is re-allocated to the connection immediately.

## Claims

1. A method to allocate bandwidth, which method is intended for a central controller of an ad hoc network, comprising:
- a step of allocating a predetermined amount of bandwidth (2A, 3A, 4A) to a certain connection requiring a certain quality of service, wherein an owner of said certain connection is a requesting terminal (MT) which is a terminal of said network or said central controller (CC) and
- a step of freeing a certain amount (2BF, 3BF, 4BF) of the allocated predetermined amount of bandwidth (2A, 3A, 4A), said certain amount (2BF, 3BF, 4BF) being the difference of said predetermined amount of bandwidth (2A, 3A, 4A) and a needed amount of bandwidth (2B. 3B, 4B) indicated by said owner.
- wherein said needed amount of bandwidth (2B, 3B, 4B) does not exceed said predetermined amount of bandwith (2A, 3A, 4A), **characterized in that**:
- in case said owner requests a re-allocation of all or parts of the freed bandwidth (2BF, 3BF, 3BF), re-allocating as much of the freed bandwidth (2BF, 3BF, 4BF), so that said indicated amount of bandwidth is available to said owner, and
- wherein said allocated predetermined amount of bandwidth (2A, 3A, 4A) is allocated based on fixed capacity allocation, FCA.

2. Method according to claim 1,
**characterized by**
allocating some or all of said certain amount of bandwidth (2BF, 3BF, 4BF) to a connection without quality of service requirements, the connection being a connection of the network.

3. Method according to any one of the preceding claims,
wherein said allocated predetermined amount of bandwidth (2A, 3A, 4A) corresponds to a fixed reserved amount of bandwidth.

4. Method according to any one of the preceding claims,
**characterized by**
re-allocating all or parts of the freed bandwidth (2BF, 3BF, 3BF) in a next transmission frame.

5. Method according to any one of the preceeding claims,
- wherein said requesting terminal (MT) and/or the central controller (CC) comprises a transmit queue (6, 8) for buffering sending data,
- wherein said requesting terminal (MT) is a terminal of said network with said central controller (CC), and
- wherein said method comprises the following steps:
- determining the filling status (F1-F9) of the transmit queue (6, 8) which indicates how much sending data is in the transmit queue (6, 8),
- determining said needed amount of bandwidth (2B, 3B, 4B), which is needed in a predetermined future transmission frame, depending on the filling status (F1-F9) of said transmit queue (6, 8), and
- indicating said needed amount of bandwidth to said central controller (CC).

6. The method according to any one of the preceding claims,
wherein said ad hoc network is operated according to the ETSI HIPERLAIV/2 standard.

7. A central controller adapted for performing and/or realizing all method steps to allocate bandwidth according to any one of claims 1 to 6.

8. A requesting terminal adapted for performing and/or realizing all method steps to allocate bandwith according to any one of claims 1 to 6.

## Patentansprüche

1. Verfahren zum Zuweisen von Bandbreite, das für eine Zentralsteuerung eines Ad-hoc-Netzwerks vorgesehen ist, mit:
- einem Schritt des Zuweisens eines vorbestimmten Werts an Bandbreite (2A, 3A, 4A) zu einer bestimmten Verbindung, die eine bestimmte Dienstqualität benötigt, wobei der Besitzer der bestimmten Verbindung ein anforderndes Terminal (MT) ist, das ein Terminal des Netzwerks oder der Zentralsteuerung (CC) ist; und
- einem Schritt des Freigebens eines bestimmten Werts (2BF, 3BF, 4BF) des zugewiesenen, vorbestimmten Werts an Bandbreite (2A, 3A, 4A), wobei dieser bestimmte Wert (2A, 3A, 4A) die Differenz zwischen dem vorbestimmten Wert an Bandbreite (2A, 3A, 4A) und einem benötigten Wert an Bandbreite (2B, 3B, 4B), wie er durch den Besitzer angezeigt wird, ist;
- wobei der benötigte Wert an Bandbreite (2B, 3B, 4B) den vorbestimmten Wert an Bandbreite (2A, 3A, 4A) nicht überschreitet;
**dadurch gekennzeichnet, dass**
- dann, wenn der Besitzer eine Neuzuweisung der gesamten freigegebenen Bandbreite (2BF, 3BF, 4BF) oder eines Teils derselben anfordert, eine Neuzuweisung bis zur freigegebenen Bandbreite (2BF, 3BF, 4BF) erfolgt, so dass der angegebene Wert an Bandbreite für den Besitzer verfügbar ist; und
- der zugewiesene, vorbestimmte Wert an Bandbreite (2A, 3A, 4A) auf Grundlage einer Zuweisung mit fester Kapazität, FCA, erfolgt.

2. Verfahren nach Anspruch 1, **dadurch gekennzeichnet, dass** der gesamte bestimmte Wert an Bandbreite (2BF, 3BF, 4BF) oder ein Teil desselben einer Verbindung ohne Dienstqualitätserfordernisse zugewiesen wird, wobei die Verbindung eine solche des Netzwerks ist.

3. Verfahren nach einem der vorstehenden Ansprüche, bei dem der zugewiesene, vorbestimmte Wert an Bandbreite (2A, 3A, 4A) einem festen, reservierten Wert an Bandbreite entspricht.

4. Verfahren nach einem der vorstehenden Ansprüche, **dadurch gekennzeichnet, dass** die gesamte freigesetzte Bandbreite (2BF, 3BF, 4BF) oder ein Teil derselben in einem nächsten Übertragungsrahmen neu zugewiesen wird.

5. Verfahren nach einem der vorstehenden Ansprüche,
- bei dem das anfordernde Terminal (MT) und/oder die Zentralsteuerung (CC) eine Sendewarteschlange (6, 8) zum Puffern von Sendedaten aufweist;
- bei dem das anfordernde Terminal (MT) ein Terminal des Netzwerks mit der Zentralsteuerung (CC) ist; und
- das die folgende Schritte aufweist:
-- Bestimmen des Füllungszustands (F1-F9) der Sendeschlange (6, 8), der anzeigt, wieviel Sendedaten sich in ihr befinden;
-- Bestimmen des erforderlichen Werts an Bandbreite (2B, 3B, 4B), wie er bei einem vorbestimmten zukünftigen Übertragungsrahmen benötigt wird, abhängig vom Füllungszustand (F1-F9) der Sendewarteschlange (6, 8); und
-- Anzeigen des benötigten Werts an Bandbreite an die Zentralsteuerung (CC).

6. Verfahren nach einem der vorstehenden Ansprüche, bei dem das Ad-hoc-Netzwerk entsprechend dem Standard ETSI HIPERLAN/2 betrieben wird.

7. Zentralsteuerung, die zum Ausführen und/oder Realisieren aller Verfahrensschritte zum Zuweisen von Bandbreite gemäß einem der Ansprüche 1 bis 6 ausgebildet ist.

8. Anforderndes Terminal, das zum Ausführen und/oder Realisieren aller Verfahrensschritte zum Zuweisen von Bandbreite gemäß einem der Ansprüche 1 bis 6 ausgebildet ist.

## Revendications

1. Procédé d'attribution de largeur de bande, procédé destiné à un contrôleur central d'un réseau ad hoc,
comprenant :
- une étape d'attribution d'une quantité prédéterminée de largeur de bande (2A, 3A, 4A) à une certaine connexion exigeant une certaine qualité de service, dans laquelle un propriétaire de ladite certaine connexion est un terminal demandeur (MT) qui est un terminal dudit réseau dudit contrôleur central (CC) et
- une étape de libération d'une certaine quantité (2BF, 3BF, 4BF) de la quantité prédéterminée attribuée de largeur de bande (2A, 3A, 4A), ladite certaine quantité (2BF, 3BF, 4BF) étant la différence de ladite quantité prédéterminée de largeur de bande (2A, 3A, 4A) et d'une quantité de largeur de bande nécessaire (2B, 3B, 4B) indiquée par ledit propriétaire,
- dans lequel ladite quantité nécessaire de largeur de bande ( 2B, 3B, 4B) ne dépasse pas ladite quantité prédéterminée de largeur de bande (2A, 3A, 4A), **caractérisé en ce que** :
- dans le cas où ledit propriétaire demande une réattribution de la totalité ou de parties de la largeur de bande libérée (2BF, 3BF, 4BF), la réattribution d'autant de la largeur de bande libérée (2BF, 3BF, 4BF), de sorte que
- dans lequel ladite quantité prédéterminée attribuée de largeur de bande (2A, 3A, 4A) est attribuée en fonction d'une attribution de capacité fixe, FCA.

2. Procédé selon la revendication 1, **caractérisé par** l'attribution de certaine ou de la totalité de ladite certaine quantité de largeur de bande (2BF, 3BF, 4BF) à une connexion sans exigences de qualité de service, la connexion étant une connexion du réseau.

3. Procédé selon l'une quelconque des revendications précédentes, dans lequel ladite quantité prédéterminée attribuée de largeur de bande (2A, 3A, 4A) correspond à une quantité réservée de largeur de bande.

4. Procédé selon l'une quelconque des revendications précédentes, **caractérisé par** une réattribution de la totalité ou de parties de la largeur de bande libérée (2BF, 3BF, 4BF) dans une trame d'émission suivante.

5. Procédé selon l'une quelconque des revendications précédentes,
- selon lequel ledit terminal demandeur (MT) et/ou le contrôleur central (CC) comprend une file d'attente d'émission (6,8) pour un tamponnage de données d'émission,
- selon lequel ledit terminal demandeur (MT) est un terminal dudit réseau avec ledit contrôleur central (CC), et
- selon lequel ledit procédé comprend les étapes suivantes :
- déterminer l'état de remplissage (F1-F9) de la file d'attente d'émission (6,8) qui indique combien de données d'émission se trouvent dans la file d'attente d'émission (6,8),
- déterminer ladite quantité nécessaire de largeur de bande (2B, 3B, 4B), qui est nécessaire dans une trame d'émission future prédéterminée, en fonction de l'état de remplissage (F1-F9) de ladite file d'attente d'émission (6,8), et
- indiquer ladite quantité nécessaire de largeur de bande audit contrôleur central (CC).

6. Procédé selon l'une quelconque des revendications précédentes, selon lequel ledit réseau ad hoc est actionné selon la norme ETSI HIPERLAN/2.

7. Contrôleur central apte à effectuer et/ou à réaliser toutes les étapes de procédé pour attribuer une largeur de bande selon l'une quelconque des revendications 1 à 6.

8. Terminal demandeur apte à effectuer et/ou réaliser toutes les étapes de procédé pour attribuer une largeur de bande selon l'une quelconque des revendications 1 à 6.
